# FASCICULE DE BREVET EUROPEEN

(11) **EP 3 927 528 B1**
(45) Date de publication et mention de la délivrance du brevet: **29.11.2023**
(21) Numéro de dépôt: 20710228.6
(22) Date de dépôt: 17.02.2020
(51) Int. Cl.: B29C 70/48, B29C 35/00, B29C 67/24, B29C 35/02, B29C 71/02

(54) **PROCÉDÉ DE FABRICATION D'UNE PIÈCE COMPOSITE THERMOPLASTIQUE EN MOULE FERME, AVEC INJECTION DANS UN MOULE ISOTHERME**
VERFAHREN ZUR HERSTELLUNG EINES THERMOPLASTISCHEN VERBUNDBAUTEILS UNTER VERWENDUNG EINER GESCHLOSSENEN FORM MIT EINSPRITZUNG IN EINE ISOTHERME FORM
METHOD FOR MANUFACTURING A THERMOPLASTIC COMPOSITE COMPONENT USING A CLOSED MOULD, WITH INJECTION IN AN ISOTHERMAL MOULD

(30) Priorité: 19.02.2019 FR 1901630
(43) Date de publication de la demande: 29.12.2021
(73) Titulaire: ARKEMA FRANCE, 92700 Colombes (FR)
(72) Inventeur: HOCHSTETTER, Gilles, 92705 COLOMBES CEDEX (FR)
(74) Mandataire: Arkema Patent
(86) Numéro de dépôt international: PCT/FR2020/050280
(87) Numéro de publication internationale: WO 2020/169906

(56) Documents cités:
- EP-A1- 2 586 585
- WO-A1-2014/064376
- WO-A1-2014/064377

## Description

### Domaine technique

L'invention concerne un procédé spécifique de fabrication en moule fermé, en particulier par voie de moulage RTM, injection-compression ou S-RIM, d'une pièce de matériau composite thermoplastique à base de polymère thermoplastique semi-cristallin et, plus particulièrement, de polyamide semi-cristallin de Tg élevée avec un cycle de moulage réduit et une productivité améliorée.

### Etat de la technique

La fabrication d'une pièce de composite thermoplastique à base d'un polyamide semi-cristallin par une technique de moulage en moule fermé, en particulier par moulage RTM, même en utilisant une composition précurseur dudit polyamide à base de prépolymères réactifs qui facilite ainsi l'imprégnation du renfort fibreux, n'empêche pas quelques problèmes supplémentaires particuliers qui rendent cette fabrication plus compliquée, problèmes qui sont à résoudre afin d'améliorer le cycle de fabrication, par conséquent la productivité globale du moulage. Ceci est lié essentiellement au fait que, pour des composites thermoplastiques mécaniquement performants, des températures élevées de mise en oeuvre sont nécessaires, en particulier d'injection à l'état fondu et de moulage en moule fermé. Compte tenu de la nécessité de refroidissement de la pièce finale moulée pour permettre son démoulage et manipulation sans risque de déformation lors du démoulage ou de sa manipulation, des cycles de chauffage-refroidissement répétitifs longs en durée sont nécessaires, la productivité en est affectée ; en outre ces cycles sont très consommateurs d'énergie. Ce problème est encore plus particulier dans le cas de polymères thermoplastiques dont la matrice finale est semi-cristalline, en particulier polyamide, avec des températures de fusion élevées et souvent supérieures à 250°C pour le polymère final ou pour les prépolymères réactifs semi-cristallins utilisés comme précurseurs, en particulier comprenant une structure aromatique et/ou cycloaliphatique. Ceci impose donc des températures de transformation beaucoup plus élevées, ce qui impose des cycles thermiques de chauffage et de refroidissement de forte amplitude et par suite, une gestion de ces cycles plus compliquée et coûteuse sur le plan énergétique. C'est encore plus problématique si l'on souhaite réaliser ce type de cyclage rapidement. Or, le temps de cycle est un des facteurs prépondérant dans le choix des solutions de moulage au plan industriel.

Par ailleurs, la demande internationale WO 2014/064377 décrit un procédé de fabrication de pièce composite en moule fermé et, en particulier, un procédé de moulage de type RTM (Resin Transfer Molding ou résine transfert moulage) ou par injection-compression ou S-RIM (structural reaction injection molding ou réaction injection moulage structural) utilisant un polymère thermoplastique comme matrice du composite semi-cristallin et plus particulièrement polyamide (PA) semi-cristallin, préférentiellement de haute Tg, c'est-à-dire d'au moins 90°C, en particulier obtenu à partir d'une composition réactive p) précurseur dudit polymère, à base de prépolymères réactifs semi-cristallins par injection du produit (composition précurseur réactive p)) à une température d'injection, T1, supérieure ou égale à la température T2 du moule et ladite température T2 du moule est comprise entre Tc -5°C et Tc -15°C.

En pratique, on choisit la masse molaire dudit ou desdits prépolymère(s) supérieure à 1000g/mol, de préférence à 1500g/mol, de façon à raccourcir l'étape de polymérisation in situ et dans le cas de l'utilisation d'un allongeur de chaine, de limiter le taux d'allongeur de chaine nécessaire à atteindre un polymère finale d'une masse suffisante pour présenter des propriétés mécaniques acceptable pour les applications structurales composites. Dans ce cas, la température de cristallisation et de fusion dudit ou desdits prépolymère(s) est proche de celle du polymère final obtenu après polymérisation. Dans le cas de l'utilisation d'un allongeur de chaine, la température de cristallisation du polymère peut être même inférieure à celle dudit ou des dit prépolymère. Ainsi, si l'on utilise un moule à une température inférieure à celle du polymère la cristallisation du ou des prépolymères intervenant dans la composition réactive est souvent trop rapide conduisant à une solidification de cette matière qui empêche l'imprégnation des fibres. En conséquence, la solution décrite par la demande internationale WO 2014/064377 présente souvent l'inconvénient que la température choisie pour le moule est trop faible.

La demande internationale WO 2014/064376 divulgue aussi un procédé de fabrication d'une pièce composite comprenant un renfort fibreux et une matrice polymère thermoplastique.

La solution de la présente invention remédie aux inconvénients cités.

### Présentation de l'invention

Le premier objet de la présente invention concerne donc un procédé selon la revendication 1 de fabrication d'une pièce de matériau composite thermoplastique comprenant un renfort fibreux et une matrice de polymère thermoplastique semi-cristallin, plus préférentiellement polyamide semi-cristallin, de température de fusion Tf inférieure à 320°C, de préférence inférieure à 300°C et, plus préférentiellement, inférieure à 290°C, telle que déterminée par analyse calorimétrique différentielle (DSC) selon la norme ISO 11357-3 : 2013. Dans une autre version plus préférée, le polymère constituant la matrice du composite présente de plus une température de transition vitreuse Tg d'au moins 90°C, de préférence d'au moins 100°C, plus préférentiellement d'au moins 110°C, encore plus préférentiellement d'au moins 120°C et en particulier d'au moins 140°C telle que déterminée par analyse calorimétrique différentielle (DSC) selon la norme ISO 11357-2:2013 .

### Description des modes de réalisation

Donc, le premier objet de l'invention concerne un procédé de fabrication d'une pièce de matériau composite thermoplastique comprenant un renfort fibreux et une matrice thermoplastique constituée d'un polymère thermoplastique semi-cristallin, plus préférentiellement à base d'un polyamide semi-cristallin, et en particulier ayant une température de fusion Tf inférieure à 320°C, de préférence Tf inférieure à 300°C, plus préférentiellement Tf inférieure à 290°C, Tf étant déterminée par analyse calorimétrique différentielle (DSC) selon la norme ISO 11357-3 : 2013 et ladite matrice imprégnant ledit renfort fibreux, ledit procédé étant caractérisé en ce qu'il comprend :
a) une étape d'imprégnation dudit renfort fibreux, sec et prédisposé dans ledit moule fermé, par injection sur ledit renfort, à une température d'injection T1 d'une composition réactive p) liquide, à l'état fondu, ladite composition réactive p) étant précurseur dudit polymère thermoplastique, et à base de, ou comprenant au moins un prépolymère réactif dudit polymère thermoplastique, ladite température T1 étant supérieure ou égale à la température T2 du moule, la température T2 dudit moule fermé étant maintenue à une valeur constante (isotherme) durant tout le moulage, de telle manière que Tc< T2 ≤ Tc + X, X étant compris de 10 à 20°C, préférentiellement X étant égal à 15°C, Tc étant la température de cristallisation dudit prépolymère intervenant dans la composition réactive ou Tc étant la plus haute des températures de cristallisation desdits prépolymères intervenant dans la composition réactive p),
   Tc étant déterminée sur ledit prépolymère ou, séparément, sur chacun des dits prépolymères, par analyse calorimétrique différentielle (DSC) selon la norme ISO 11357-3 : 2013,
   le ou lesdits prépolymère(s) ayant une viscosité à ladite température T2 dudit moule inférieure à 50 Pa.s, de préférence inférieure à 10 Pa.s, et plus préférentiellement inférieure à 5 Pa.s,
b) une étape de polymérisation au moins partielle de ladite composition p) réactive par polycondensation ou par polyaddition suivant le cas, et moulage avec l'étape de polymérisation étant simultanée avec l'étape d'imprégnation a) et avec ledit moulage,
c) démoulage de ladite pièce dès que la température de ladite pièce T3 est égale à ladite température de régulation T2 en isotherme dudit moule, avec la polymérisation de ladite composition précurseur p) étant éventuellement partielle,
d) éventuellement et si nécessaire, poursuite de la polymérisation de ladite pièce dans une étape séparée et hors moule, par recuit dans une étuve, de préférence à une température de recuit Tr inférieure à la température de fusion Tf et plus particulièrement ladite température Tr étant située entre Tf et Tf -30°C.

La viscosité à l'état fondu dudit ou desdits prépolymères intervenant dans la composition réactive est mesurée séparément, en rhéologie plan-plan sous 1 Hz et 2% de déformation, à une température égale à celle du moule, T2.

Lorsque la température de fusion dudit ou desdits prépolymère est supérieure à T2, la fusion dudit ou desdits prépolymères sera suivie d'un refroidissement à la température T2 avant la mesure de la viscosité : ledit ou lesdits prépolymères sont donc dans un état de surfusion lorsque la mesure de viscosité est réalisée. Faire cette mesure séparément signifie que ledit ou lesdits prépolymère(s) ne sont pas mélangés avec les autres constituants de la composition réactive lorsque la mesure est réalisée de façon à faire cette mesure sur une entité présentant une masse moléculaire constante au cours de la mesure. Faire cette mesure en surfusion, signifie que T2 > Tc, mais proche de Tc, Tc étant la température de cristallisation dudit prépolymère intervenant dans la composition réactive ou Tc étant la plus faible des températures de cristallisation desdits prépolymères intervenant dans la composition réactive : en effet, il est toujours possible pour ledit ou lesdits prépolymères thermoplastiques de cristalliser mais de manière plus lente, ce qui permet d'injecter la composition réactive, d'imprégner les fibres et de polymériser par la suite avant la cristallisation.

L'expression « Tc étant la plus haute des températures de cristallisation desdits prépolymères intervenant dans la composition réactive p) » signifie que lorsque au moins deux prépolymères sont présents, qu'ils correspondent au même polyamide avec des terminaisons de chaine différentes telles que diacide et diamine, ou à des polyamides différents et quelles que soient les terminaisons de chaîne, la Tc inférieure à T2 est celle qui est la plus élevée parmi les au moins deux prépolymères.

Avantageusement, T1=T2.

Le ou les prépolymères présents dans la composition réactive sont alors injectés en surfusion, ce qui nécessite un système de refroidissement de la composition réactive utilisée, juste après le mélange, mais avant l'injection dans le moule un système de refroidissement de tout ou partie des différents composants de la composition, juste avant mélange.

Cela permet ainsi de contrôler la cinétique lorsque l'on utilise par exemple un allongeur de chaîne, par exemple de type oxazoline ou de type anhydride pyromélitique car sinon la cinétique est trop rapide et les fibres ne peuvent pas s'imprégner correctement.

Cela permet également de tendre vers un procédé complètement isotherme car on polymérise et on solidifie à la même température.

Ladite composition réactive p) peut être définie selon deux options p1) et p2) comme suit :
- p1) une composition précurseur monocomposante p11) ou bicomposante p12), ladite composition monocomposante p11) étant à base d'un prépolymère réactif thermoplastique p11) semi-cristallin et plus préférentiellement prépolymère réactif polyamide semi-cristallin, réactif sur lui-même, de préférence par polycondensation et ladite composition bicomposante p12), étant à base de deux prépolymères réactifs thermoplastiques p121) et p122) semi-cristallins, plus préférentiellement prépolymères réactifs polyamides semi-cristallins, réactifs entre eux, de préférence par polycondensation ou polyaddition,
- p2) une composition bicomposante comprenant un prépolymère réactif thermoplastique p21) semi-cristallin, plus préférentiellement prépolymère réactif polyamide semi-cristallin et un allongeur de chaîne p22) non polymérique, porteur de groupements réactifs avec ceux dudit prépolymère p21) et avec p21) et p22) étant réactifs par réaction de polyaddition.

Comme exemples de polymères thermoplastiques semi-cristallins convenables comme matrice thermoplastique dans la présente invention, on peut citer les polyamides, en particulier comprenant une structure aromatique et/ou cycloaliphatique, y compris copolymères par exemple copolymères polyamides-polyéthers, les polyesters en particulier comprenant une structure aromatique et/ou cycloaliphatique, les polyaryléthercétones (PAEK), les polyétheréther cétones (PEEK), les polyéthercétone cétones (PEKK), les polyéthercétoneéthercétone cétones (PEKEKK), les polyphénylsulfures (PPS), les polyimides en particulier polyétherimides (PEI) ou polyamide-imides, les polylsulfones (PSU) en particulier polyarylsulfones tels que les polyphényl sulfones (PPSU), polyéthersulfones (PES), PMMA, PVDF, et de préférence polyamides et leurs copolymères, plus particulièrement comprenant une structure aromatique et/ou semi-aromatique et semi-cristallins.

Comme exemples convenables de polymères thermoplastiques semi-cristallins, on peut citer les polyamides (en particulier comprenant une structure aromatique et/ou cycloaliphatique) et copolymères, polyesters (en particulier comprenant une structure aromatique et/ou cycloaliphatique), les polyaryléthercétones (PAEK), polyétheréther cétones (PEEK), polyéthercétone cétones (PEKK), polyéthercétoneéthercétone cétones (PEKEKK) polyphénylsulfures (PPS), PVDF.

Plus particulièrement préférés parmi les polymères semi-cristallins, sont les polyamides et leurs copolymères semi-cristallins, en particulier comprenant une structure aromatique et/ou cycloaliphatique.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci. Avantageusement, les Polyamides (PA) sont choisis parmi les polyamides aliphatiques, notamment le PA11 et le PA12, les polyamides cycloaliphatiques, et les polyamides semi-aromatiques (polyphthalamides) éventuellement modifiés par des motifs urées, et leur copolymères.

Avantageusement, ledit polymère thermoplastique est :
un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), ou un mélange de ceux-ci ou un copolyamide de ceux-ci,
un polyamide semi-aromatique, éventuellement modifié par des unités urées, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;
X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18,notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA MXDT/6T, un PA PA11/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, PA 11/BACT/6T un PA 11/MPMDT/10T et un PA 11/MXDT/10T, et les copolymères blocs, notamment polyamide/polyéther (PEBA).
T correspond à l'acide téréphtalique, MXD correspond à la m-xylylène diamine, MPMD correspond à la méthylpentaméthylène diamine et BAC correspond au bis(aminométhyl)cyclohexane.

Plus particulièrement, ledit procédé concerne un procédé de moulage par RTM (résine transfert molding), injection-compression ou S-RIM.

Ledit renfort fibreux est de préférence à base de fibres de renfort longues, de préférence avec L/D, rapport ou facteur de forme, longueur sur diamètre, supérieur à 1000, de préférence supérieur à 2000. Elles peuvent être sous forme d'un assemblage de fibres à l'état sec. Ledit assemblage peut être une préforme sèche de fibres (avant imprégnation) placée dans ledit moule fermé.

Plus particulièrement, la polymérisation dans le moule peut n'être que partielle, avec dans ce cas une étape prévue et mise en oeuvre séparément, de finition de la pièce moulée dans une étape séparée de recuit hors moule et à une température de recuit Tr inférieure à la température de fusion Tf dudit polymère thermoplastique semi-cristallin et plus particulièrement, la température de recuit Tr est comprise entre Tf et Tf -30°C.

Dans le cas d'une polymérisation partielle, lors du démoulage de l'étape c), le taux global de conversion des fonctions réactives desdits prépolymères dans ladite composition réactive p), au démoulage de l'étape c), est d'au moins 50%, de préférence d'au moins 70% avec une conversion partielle, en particulier ne dépassant pas 90%.

La masse moléculaire moyenne en nombre Mn (calculée à partir de la titration des fonctions terminales) desdits prépolymères réactifs semi-cristallins, en particulier polyamides semi-cristallins, impliqués dans ladite composition précurseur, est dans la plage allant de 500 à 10000, de préférence de 1000 à 3000.

Dans un mode de réalisation, ledit prépolymère réactif semi-cristallin est un prépolymère diacide et la masse moléculaire moyenne en nombre Mn est dans la plage allant de 500 à 2500.

Ledit prépolymère réactif semi-cristallin diacide peut réagir avec un allongeur de chaine tel que défini ci-dessous pour obtenir le polymère semi-cristallin.

Dans un autre mode de réalisation, ledit prépolymère réactif semi-cristallin est un prépolymère diamine et la masse moléculaire moyenne en nombre Mn est dans la plage allant de 1500 à 3000.

Ledit prépolymère réactif semi-cristallin diamine peut réagir avec un allongeur de chaine tel que défini ci-dessous pour obtenir le polymère semi-cristallin.

Ledit prépolymère réactif semi-cristallin diacide peut également réagir avec ledit prépolymère réactif semi-cristallin diamine pour obtenir le polymère semi-cristallin.

Selon un mode préféré de réalisation du procédé de l'invention, la viscosité de ladite composition précurseur dans les conditions d'imprégnation, en particulier dans les conditions de température et de durée d'imprégnation, ne dépasse pas 50 Pa.s, de préférence ne dépasse pas 10 Pa.s et plus préférentiellement ne dépasse pas 5 Pa.s. Dans le cas d'un polymère thermoplastique semi-cristallin, en particulier polyamide semi-cristallin composant la matrice thermoplastique dudit composite selon l'invention, il est caractérisé préférentiellement par une température de transition vitreuse Tg d'au moins 90°C, de préférence d'au moins 100°C et plus préférentiellement d'au moins 110°C, et encore plus préférentiellement d'au moins 120°C et d'une température de fusion Tf inférieure à 300°C et de préférence Tf inférieure à 300°C, plus préférentiellement inférieure à 280°C, plus particulièrement entre 200°C et 280°C.

Plus particulièrement, ledit polymère thermoplastique de ladite matrice est semi-cristallin, de préférence polyamide semi-cristallin, lesdits prépolymères réactifs correspondants de la composition réactive p) l'étant également et ladite température d'injection T1 de l'étape a) étant supérieure à ladite température de fusion Tf, dudit polymère thermoplastique, de préférence polyamide semi-cristallin.

La masse moléculaire moyenne Mn, en nombre dudit polymère polyamide final de la matrice thermoplastique dudit matériau composite est de préférence dans une plage allant de 10000 à 40000 et de préférence de 12000 à 30000 et encore plus préférée de 15000 à 25000. Ledit polymère final de matrice est obtenu avec des prépolymères réactifs correspondants (dans ladite composition réactive p)), de masse Mn d'au moins deux fois inférieure à ladite Mn dudit polymère final de la matrice dudit composite.

La structure semi-cristalline dudit polymère thermoplastique de ladite matrice, en particulier polyamide est essentiellement apportée par la structure des prépolymères réactifs correspondants, tels que définis selon compositions p1) et p2) ci-haut, également semi-cristallins et impliqués dans ladite composition précurseur p).

Concernant ladite composition précurseur p), selon une première option préférée, elle peut être définie selon p1) et en particulier être monocomposante à base d'un prépolymère polyamide p11) réactif bifonctionnel semi-cristallin, portant sur la même chaîne une fonction terminale amine et une fonction terminale acide (carboxy).

Selon une autre option préférée de ladite composition précurseur p), elle est définie selon p1), elle est bicomposante et à base de deux prépolymères p12) : un premier prépolymère p121) polyamide réactif bifonctionnel semi-cristallin, portant 2 fonctions réactives X' identiques d'amine ou d'acide (carboxy) et un deuxième prépolymère p122) polyamide réactif bifonctionnel semi-cristallin, portant 2 fonctions Y' identiques d'amine ou d'acide (carboxy) avec les deux fonctions X' et Y' étant réactives entre elles, plus préférentiellement les deux prépolymères p121) et 122) étant semi-cristallins.

Selon une deuxième option préférée, ladite composition précurseur est définie selon p2) et elle est bicomposante à base d'un prépolymère p21) polyamide réactif bifonctionnel semi-cristallin, portant 2 fonctions réactives X identiques d'amine ou d'acide (carboxy) et d'un allongeur de chaîne non polymérique, de préférence de masse moléculaire inférieure à 500 et en particulier inférieure à 400, ledit allongeur p22) portant 2 fonctions Y réactives identiques, avec ladite fonction X dudit prépolymère étant réactive avec ladite fonction Y dudit allongeur. Ladite fonction Y dudit allongeur p22) peut être sélectionnée comme suit en fonction de X :
- pour X étant carboxy, Y est choisi parmi : oxazoline, oxazine, imidazoline, aziridine ou époxy
- pour X étant amine, Y est choisi parmi : maléimide (de préférence avec amine secondaire pour éviter une réticulation avec bismaléimides), époxy, isocyanate bloqué, oxazinone, oxazolinone, caprolactame ou anhydride carboxylique et dans ce dernier cas en particulier ledit allongeur peut être choisi parmi les anhydrides cycliques aromatiques et/ou cycloaliphatiques.

Des exemples d'allongeurs p22) convenables pour l'invention sont cités ci-dessous. La partie de l'allongeur p22) portant les deux fonctions (groupements) Y pourrait être représentée par un biradical -A'-, ledit allongeur p22) ayant une formule globale Y-A'-Y. Plus particulièrement, quand ledit allongeur Y-A'-Y correspond à une fonction Y choisie parmi oxazinone, oxazolinone, oxazine, oxazoline ou imidazoline, dans ce cas, dans l'allongeur de chaîne représenté par Y-A'-Y, A' peut représenter un alkylène, tel que - (CH₂)ₘ- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques, et de préférence A' peut être un arylène et/ou un cycloalkylène. Ceci reste valable quand Y est époxy.

Dans le cas du carbonyl- ou térephtaloyl- ou isophtaloyl- biscaprolactame comme allongeur de chaîne Y-A'-Y, les conditions préférées évitent l'élimination de sous produit, comme c'est le cas pour le caprolactame lors de ladite polymérisation et moulage à l'état fondu.

Dans le cas où Y est une fonction d'isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère p21) porteur de X = amine, les conditions préférées évitent toute formation de cycle imide lors de la polymérisation et moulage (ou mise en oeuvre) à l'état fondu.

Pour X = amine, le groupement Y est choisi de préférence parmi : isocyanate bloqué, oxazinone et oxazolinone ou époxy, plus préférentiellement oxazinone et oxazolinone, avec comme radical A' étant comme défini ci-haut.

Comme exemples d'allongeurs de chaîne, portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leur mode de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en oeuvre de l'invention, on pourra se référer à ceux décrits (« A » à « F ») à la page 7 à 8 et tableau 1 de la page 10, dans la demande EP 0 739 924 ainsi qu'à leurs procédés de préparation et leur mode de réaction qui y sont exposés.

Comme exemples d'allongeurs de chaîne à fonction réactive Y = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et modes de réaction qui y sont exposés.

Comme exemples de groupements Y oxazinones (cycle à 6 atomes) et oxazolinones (cycle à 5 atomes) convenables, on peut citer les groupements Y dérivés de benzoxazinone, d'oxazinone ou d'oxazolinone, avec comme A' pouvant être une simple liaison covalente avec pour allongeurs correspondants respectifs étant la bis-(benzoxazinone), la bisoxazinone et la bisoxazolinone.

A' peut être également un alkylène en C₁ à C₁₄, de préférence en C₂ à C₁₀ mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y choisies parmi oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téréphtaloyle) avec comme exemple d'allongeur de cet type la 1, 1' isophtaloyl-bis(2-méthyl aziridine).

La présence d'un catalyseur de la réaction entre ledit prépolymère p21) et ledit allongeur p22) à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9 lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalénylènes). De préférence, A' représente un arylène qui peut être benzénique ou naphténique substitué ou non.

Les fibres du renfort fibreux peuvent être continues et présentes sous forme d'assemblage qui peut être une préforme. Elles peuvent se présenter sous forme de renfort unidirectionnel (UD) ou multidirectionnel (2D, 3D). En particulier, elles peuvent être sous forme de tissus, d'étoffes, de nappes, de bandes ou de tresses et peuvent également être coupées par exemple sous forme de non tissés (mats) ou sous forme de feutres.

Ces fibres de renfort peuvent être choisies parmi :
- les fibres minérales, celles-ci ayant des températures de fusion Tf' élevées et supérieures aux températures de mise en oeuvre,
- les fibres polymériques ou de polymère, ayant une température de fusion Tf' ou à défaut de Tf', une température de transition vitreuse Tg', bien supérieure aux températures de mise en oeuvre,
- ou les mélanges des fibres citées ci-haut.

Plus particulièrement, ces fibres de renfort peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte ou à base de basalte, fibres ou filaments à base de métaux et/ou leurs alliages, fibres à base d'oxydes métalliques comme Al₂O₃, les fibres métallisées comme les fibres de verre métallisées et les fibres de carbone métallisées ou les mélanges des fibres précitées, et

- les fibres de polymère ou polymériques, sous condition précitée ci-haut, sont choisies parmi :
- les fibres de polymères thermoplastiques et plus particulièrement choisies parmi : le polyéthylène téréphtalate (PET), le polybutylène téréphtalate (PBT),
- les fibres de polyamides répondant à l'une des formules : 6, 11, 12, 6.10, 6.12, 6.6, 4.6,
- les fibres d'aramides (comme le Kevlar^{®}) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
- les fibres de copolymères blocs de polyamide tels que le polyamide/polyéther, les fibres de polyaryléthers cétones (PAEK) telle que la polyétheréther cétone (PEEK), la polyéthercétone cétone (PEKK), la polyéthercétoneéthercétone cétone (PEKEKK).

Les fibres de renfort préférées sont des fibres longues choisies parmi les : fibres de carbone, y compris métallisées, fibres de verre, y compris métallisées de type E, R, S2, fibres d'aramides (comme le Kevlar^{®}) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar^{®}) ou leurs mélanges. Lesdites fibres peuvent représenter des taux de 40% à 70% en volume et de préférence de 50% à 65% en volume dudit matériau composite.

L'assemblage de fibres peut être aléatoire (mat), unidirectionnel (UD) ou multidirectionnel (bidirectionnel 2D, tridimensionnel 3D ou autre). Son grammage, c'est-à-dire son poids par mètre carré peut aller de 100 à 1000 g/m², de préférence de 200 à 700g/m². Concernant le renfort fibreux dudit matériau composite thermoplastique, il est de préférence à base de fibres de renfort longues avec facteur de forme L/D supérieur à 1000, de préférence supérieur à 2000, L étant la longueur et D étant le diamètre de la fibre.

Les fibres les plus préférées sont sélectionnées parmi les fibres de verre, de carbone, de céramique et d'aramide ou leurs mélanges.

En plus desdites fibres de renfort, la composition dudit composite thermoplastique du procédé selon l'invention peut comprendre d'autres charges et additifs.

Parmi les charges convenables, on peut citer par exemple : les charges minérales ou organiques, comme le noir de carbone, nanotubes de carbone (NTC), nanofibrilles de carbone, billes ou poudre de verre, polymères recyclés broyés à l'état de poudre.

Parmi les additifs convenables, on peut citer : des additifs absorbants dans l'UV ou IR de façon à permettre le soudage du composite obtenu, par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide matrice du composite obtenu.

Ladite pièce de matériau composite thermoplastique du procédé de l'invention est en particulier une pièce mécanique ou de structure, y compris semi-structurale, de préférence en 3D. La présente invention couvre également l'utilisation du procédé tel que défini selon l'invention ci-haut dans la fabrication de pièces mécaniques et de structure, pouvant être en 3D (tridimensionnelles), ces pièces étant en particulier utilisées pour des applications dans le domaine de l'automobile, ferroviaire, marin, de l'éolien, photovoltaïque, solaire pour chauffage thermique et centrales thermiques, du sport, aéronautique et spatial, du transport routier (pièces pour camions), du bâtiment, génie civil, équipements urbains et signalisation, des panneaux, des loisirs.

Méthodes générales de détermination des caractéristiques citées :
La viscosité à l'état fondu du prépolymère est mesurée suivant le manuel de référence du constructeur de l'appareil de mesure utilisé, qui est un rhéomètre Physica MCR301, sous balayage d'azote à la température donnée, en rhéologie plan-plan sous 1 Hz et 2% de déformation entre deux plans parallèles de diamètre de 50 mm.

La Mn du prépolymère ou du polymère thermoplastique est déterminée à partir de la titration (dosage) des fonctions terminales selon une méthode potentiométrique (dosage direct pour NH₂ ou carboxy) et à partir de la fonctionnalité théorique qui est de 2 (en fonctions terminales) pour prépolymères et polymères linéaires préparés à partir de seuls monomères bifonctionnels.

La température de transition vitreuse Tg des polymères thermoplastiques utilisés est mesurée à l'aide d'un calorimètre différentiel à balayage (DSC), après un 2^{ème} passage en chauffe, suivant la norme ISO 11357-2: 2013. La vitesse de chauffage et de refroidissement est de 20°C/min.

La température de fusion Tf et la température de cristallisation Tc est mesurée par DSC, après une 1^{ère} chauffe, selon ISO 11357-3: 2013. La vitesse de chauffage et de refroidissement est de 20°C/min.

Les exemples suivants sont donnés à titre d'illustration de l'invention et de ses performances, sans aucune limitation sur la portée des objets revendiqués.

### Exemples

Les exemples suivants illustrent de façon non limitative la portée de l'invention.

### A) Préparation de prépolymères P(X)n

### Exemple 1 : Prépolymères polyamide semi-cristallin 11/6.T/10.T acides : prépolymère 1 (prépo 1) et prépolymère 3 (prépo 3) et amine : prépolymère 2 (prépo 2)

Dans un réacteur autoclave de 2 litres, on introduit successivement (tableau 1):

**[Tableau 1]**

| | Prépo 1 | Prépo 2 | Prépo 3 |
|---|---|---|---|
| acide amino11 undécanoïque | 41 g | 20 g | 41 g |
| 1,6 hexanediamine (HMDA) | 71 g | 48 g | 71 g |
| 1,10 décanediamine | 250 g | 167 g | 250 g |
| Acide téréphtalique | 440 g | 166 g | 383 g |
| Rhodorsil^{®} RG22 | 0,375 g | 0,375 g | 0,375 g |
| NaH₂PO₂ 60% dans l'eau | 3 g | 3 g | 3 g |
| eau | 189 g | 189 g | 189 g |

Le Rhodorsil^{®} RG22, un antimousse, est commercialisé par la Société Bluestar Silicones. Après fermeture du réacteur, l'atmosphère est purgée de son oxygène par de l'azote. Le réacteur (contenu) est ensuite chauffé à 250°C, la pression dans le réacteur atteignant 32 bars. L'eau est progressivement éliminée du réacteur par détente en maintenant 32 bars et une température matière d'environ 250°C. La pression est ensuite abaissée jusqu'à pression atmosphérique par détente en augmentant progressivement la température matière jusqu'à 300°C. Le réacteur arrivé à pression atmosphérique est ensuite mis sous balayage d'azote pendant 20 minutes. Le contenu du réacteur est ensuite vidangé et refroidi dans l'eau. Après essorage, broyage grossier et séchage, on recueille 650 g de prépolymère.

Les propriétés et caractéristiques essentielles de ce prépolymère sont présentées au tableau 2 ci-dessous.

**[Tableau 2]**

| Prépolymère (prépo) | X | Tg (°C) | Tf (°C) | Tc (°C) | NH₂ (meq/g) | COOH (meq/ g) | n | Mn calc | Visco sité état fondu | T° vs Visco sité fondu (°C) |
|---|---|---|---|---|---|---|---|---|---|---|
| 11/6T/10T Prépo 1 | CO₂H | 88 | 267 | 235 | 0 | 1,858 | 2 | 1080 | 0,82 | 225 |
| 11/6T/10T Prépo 2 | NH₂ | 81 | 267 | 235 | 0,783 | 0 | 2 | 2550 | 1.48 | 250 |
| 11/6T/10T Prépo 3 | CO₂H | 101 | 267 | 235 | 0 | 0,823 | 2 | 2430 | 1,1 | 300 |

Comme indiqué ci-dessus, la viscosité à l'état fondu dudit ou desdits prépolymères intervenant dans la composition réactive est mesurée séparément, en rhéologie plan-plan sous 1 Hz et 2% de déformation, à une température égale à celle du moule, T2.

Lorsque la température de fusion dudit ou desdits prépolymère est supérieure à T2, la fusion dudit ou desdits prépolymères sera suivie d'un refroidissement à la température T2 avant la mesure de la viscosité : ledit ou lesdits prépolymères sont donc dans un état de surfusion lorsque la mesure de viscosité est réalisée.

### B) Préparation des pièces composites et performances

### Appareillage utilisé et principe de fonctionnement

Un équipement RTM est utilisé comprenant 2 chambres séparées chauffantes permettant de fondre séparément le prépolymère et l'allongeur de chaîne. Deux pistons (un par chambre), fonctionnant sous 1 à 10 bars, permettent d'envoyer les 2 composants fondus dans un mélangeur statique puis d'injecter le mélange réactif dans un moule contenant un renfort fibreux.

Le temps de séjour est court (inférieur à 10 s) et permet d'éviter tout allongement de chaîne significatif. Ainsi, la viscosité du mélange peut être considérée identique à celle du prépolymère seul, à la température d'injection.

Le renfort fibreux utilisé est un tissu 600T FV de Chomarat (600g/m²), 4 couches de ce renfort fibreux ont été déposées dans le moule avant injection pour fabriquer une plaque de composite. Le taux de fibres dans la plaque composite est de 60% en volume (vol.). La vitesse du piston permet également d'ajuster le temps de séjour dans le mélangeur de manière à comparer l'effet de certains paramètres du procédé, selon l'invention et en dehors de l'invention.

Le rapport molaire entre fonctions réactives X dudit prépolymère et Y dudit allongeur est
de : 1/1 (stoechiométrie).
Moule : cylindrique, 70 mm x 4 mm.
% en volume de fibres : 50% en vol.
Performances mécaniques : flexion en 3 points selon la norme ISO 14125.
Température de fusion Tf du prépolymère et allongeur : 267°C.

### Exemples de composite

Dans tous les cas, soit on utilise le prépolymère réactif diacide (diCOOH) et comme allongeur de chaîne le PBO (bisoxazoline) Allinco 1-3 commercialisé par la société DSM, qui est un allongeur de chaîne présentant 2 fonctions oxazolines, soit on utilise le prépolymère réactif diamine et comme allongeur de chaîne l'anhydride pyroméllitique commercialisé par la société Sigma-Aldrich, soit on utilise un mélange diacide-diamine.

### Exemple 1 (comparatif)

Dans l'une des chambres, on fond ledit prépolymère Prépo 1 (Mn 1080) à 280°C avant allongement de chaîne. Ce prépolymère est fonctionnalisé diacide. Dans l'autre chambre, on fond du PBO (20% en poids), à 160°C. Le prépolymère1 est refroidit rapidement à 225°C, juste avant d'être mélangé avec le PBO, le mélange réactif est ensuite injecté à 225°C (T1) en moins de 10 s, dans un moule maintenu à 225°C (T2). T2 inférieur à Tc et égal à Tc-10°C.

### Résultat : l'imprégnation est mauvaise, le mélange réactif se fige et cristallise sur la paroi du moule froid et empêche l'imprégnation des fibres.

### Exemple comparatif n°2 ;

Dans l'une des chambres, on fond ledit prépolymère 2 (Mn 2550) à 280°C. Ce prépolymère est fonctionnalisé diamine.

Le prépolymère 2 est refroidit rapidement à 250°C avant d'être injecté à T1=250°C, en moins de 10 s, dans un moule maintenu à T2=250°C soit Tc+15°C. La viscosité en fondu du prépolymère 2, est de 1.5 Pa.s à 250°C.

Résultats : l'imprégnation des fibres est très bonne : le produit se démoule bien ce qui prouve qu'il a cristallisé et la cristallisation est très proche de celle que l'on obtient par refroidissement sous la Tc. Les propriétés mécaniques et la Tg sont données dans le tableau 2 ci-dessous. Cela démontre que l'injection à une température T1=Tc+15°C, dans un moule mis à une température T2=T1 est possible et permet un cycle de moulage isotherme. Cependant l'absence de l'allongeur de chaine n'a pas permis d'obtenir un composite présentant de bonnes propriétés mécaniques, comme l'atteste les résultats de flexion dans le tableau 3, ci-dessous.

**[Tableau 3]**

| Exemple | FLEXION 3 POINTS | | | DSC | |
|---|---|---|---|---|---|
| | E (GPa) | σ rupture (MPa) | ε rupture (%) | Tg prépolymère | Tg plaque composite |
| | | | | | |
| Exemple n°2 : comparatif | 13 | 50 | 0,8 | 81°C | 101°C |
| N°3 : exemple selon l'invention | 18,0 | 250 | 1,8 | 81°C | 108°C |
| N°4 : exemple selon l'invention | 24,5 | 605 | 2,5 | 101°C | 110°C |
| N°5 : exemple selon l'invention | 25 | 620 | 2,5 | 81°C prépo 2 | 115°C |
| | | | | 101°C prépo 3 | |

### Exemple 3 (selon invention avant un recuit et complété avec recuit selon exemple 3)

Dans l'une des chambres, on fond ledit prépolymère 2 avant allongement de chaîne, à 280°C. Ce prépolymère est fonctionnalisé diamine. Dans l'autre chambre on fond de l'anhydride pyroméllitique à 290°C, commercialisé par la société Sigma-Aldrich, qui est un allongeur de chaîne présentant 2 fonctions anhydride.

Le prépolymère est refroidit rapidement à 250°C avant d'être mélangé avec le dianhydride puis le mélange réactif est ensuite injecté à T1=250°C, en moins de 10 s, dans un moule maintenu à T2=250°C. Ensuite, on démoule après un maintien de 2mn à 250°C.

Résultats : l'imprégnation des fibres est très bonne : le produit se démoule bien ce qui prouve qu'il a cristallisé et la cristallisation est très proche de celle que l'on obtient par refroidissement sous la Tc. Les propriétés mécaniques et la Tg sont données dans le tableau 2 ci-dessous. Ces propriétés montrent que l'injection à une température T1=Tc+15°C, dans un moule mis à une température T2=T1 et un maintien de 2mn à cette température permet un avancement partiel de la polymérisation et n'empêche pas la solidification de la résine (et donc sa cristallisation).

L'avancement partiel se voit par des propriétés mécaniques meilleures que lorsqu'il n'y a pas d'allongement (Cf tableau 3). Même si l'avancement partiel de la polymérisation par polyaddition n'est pas encore suffisant pour permettre d'atteindre les propriétés mécaniques finales satisfaisantes mais qui peuvent être atteintes par une étape séparée supplémentaire de recuit comme dans l'exemple 4 ci-dessous n'affectant pas le cycle de moulage.

### Exemple 4 (= exemple 3 selon l'invention avec recuit)

Dans l'une des chambres, on fond ledit prépolymère 3 avant allongement de chaîne, à 280°C. Ce prépolymère est fonctionnalisé diacide. Dans l'autre chambre on fond du PBO à 160°C (bisoxazoline) Allinco 1-3 commercialisé par la société DSM, qui est un allongeur de chaîne présentant 2 fonctions oxazolines.

Le prépolymère est refroidit rapidement à 250°C avant d'être mélangé avec le PBO puis le mélange réactif est ensuite injecté à T1=250°C, en moins de 10 s, dans un moule maintenu à T2=250°C,

Ensuite, on démoule après un maintien de 2mn à 250°C et on place la plaque composite en étuve sous vide à Tr=250°C, pendant 10mn.

Résultats : l'imprégnation des fibres est très bonne : le produit se démoule bien ce qui prouve qu'il a cristallisé et la cristallisation est très proche de celle que l'on obtient par refroidissement sous la Tc. Les propriétés mécaniques et la Tg sont données dans le tableau 2 ci-dessous. Ces propriétés sont bonnes (cf tableau 3 ci-dessus) et montrent que l'injection à une température T1=Tc+15°C, dans un moule mis à une température T2=T1 et le maintien pendant 2mn à cette température dans le moule, cumulé au recuit de 10 mn en étuve sous vide à Tr=250°C permettent cette fois un avancement suffisant de la polymérisation par polyaddition

### Exemple 5 :

Dans l'une des chambres, on fond ledit prépolymère 2 avant allongement de chaîne, à 280°C. Ce prépolymère est fonctionnalisé diamine. Dans l'autre chambre on fond le prépolymère 3 fonctionnalisés diacide. Les prépolymères sont mélangés puis injecté à T1=280°C, en moins de 10 s, dans un moule maintenu à T2=250°C, soit Tc+15°C.

On démoule après un maintien de 5mn dans le moule thermostaté à 250°C ;

Résultats : l'imprégnation des fibres est très bonne : le produit se démoule bien ce qui prouve qu'il a cristallisé et la cristallisation est très proche de celle que l'on obtient par refroidissement sous la Tc. Les propriétés mécaniques et la Tg sont données dans le tableau 3 ci-dessus. Ces propriétés sont bonnes et montrent que l'injection à une température T1> T2 moule, favorise la polymérisation=Tc+15°C par polycondensation.

## Revendications

1. Procédé de fabrication d'une pièce de matériau composite thermoplastique comprenant un renfort fibreux et une matrice thermoplastique constituée d'un polymère thermoplastique semi-cristallin, plus préférentiellement à base d'un polyamide semi-cristallin, et en particulier ayant une température de fusion Tf inférieure à 320°C, de préférence Tf inférieure à 300°C, plus préférentiellement Tf inférieure à 290°C, Tf étant déterminée par analyse calorimétrique différentielle, DSC, selon la norme ISO 11357-3 : 2013 et ladite matrice imprégnant ledit renfort fibreux, ledit procédé comprenant
a) une étape d'imprégnation dudit renfort fibreux, sec et prédisposé dans ledit moule fermé, par injection sur ledit renfort, à une température d'injection T1 d'une composition réactive p) liquide, à l'état fondu, ladite composition réactive p) étant précurseur dudit polymère thermoplastique, et à base de, ou comprenant au moins un prépolymère réactif dudit polymère thermoplastique, ladite température T1 étant supérieure ou égale à la température T2 du moule, la température T2 dudit moule fermé étant maintenue à une valeur constante, isotherme, durant tout le moulage, de telle manière que Tc< T2 ≤ Tc + X,
X étant compris de 10 à 20°C, préférentiellement X étant égal à 15°C, Tc étant la température de cristallisation dudit prépolymère intervenant dans la composition réactive ou Tc étant la plus haute des températures de cristallisation desdits prépolymères intervenant dans la composition réactive p),
Tc étant déterminée sur ledit prépolymère ou, séparément, sur chacun des dits prépolymères, par analyse calorimétrique différentielle, DSC, selon la norme ISO 11357-3 : 2013
le ou lesdits prépolymère(s) ayant une viscosité à ladite température T2 dudit moule inférieure à 50 Pa.s, de préférence inférieure à 10 Pa.s, et plus préférentiellement inférieure à 5 Pa.s,
la viscosité étant mesurée suivant le manuel de référence du constructeur de l'appareil de mesure utilisé, qui est un rhéomètre Physica MCR301, sous balayage d'azote à la température donnée, en rhéologie plan-plan sous 1 Hz et 2% de déformation entre deux plans parallèles de diamètre de 50 mm,
b) une étape de polymérisation au moins partielle de ladite composition p) réactive par polycondensation ou par polyaddition suivant le cas, et moulage avec l'étape de polymérisation étant simultanée avec l'étape d'imprégnation a) et avec ledit moulage,
c) démoulage de ladite pièce dès que la température de ladite pièce T3 est égale à ladite température de régulation T2 en isotherme dudit moule, avec la polymérisation de ladite composition précurseur p) étant éventuellement partielle,
d) éventuellement et si nécessaire, poursuite de la polymérisation de ladite pièce dans une étape séparée et hors moule, par recuit dans une étuve, de préférence à une température de recuit Tr inférieure à la température de fusion Tf et plus particulièrement ladite température Tr étant située entre Tf et Tf -30°C.

2. Procédé selon la revendication 1, **caractérisé en ce que** T1 = T2.

3. Procédé selon la revendication 1 ou 2, **caractérisé en ce que** ladite composition p) est définie selon les options p1) et p2) suivantes :
p1) une composition précurseur monocomposante p11) ou bicomposante p12), ladite composition monocomposante p11) étant à base d'un prépolymère réactif thermoplastique p11) semi-cristallin et plus préférentiellement prépolymère réactif polyamide semi-cristallin, réactif sur lui-même, de préférence par polycondensation et ladite composition bicomposante p12) étant à base de deux prépolymères réactifs thermoplastiques p121) et p122) semi-cristallins, plus préférentiellement prépolymères réactifs polyamides semi-cristallins, réactifs entre eux , de préférence par polycondensation ou polyaddition
p2) une composition bicomposante comprenant un prépolymère réactif thermoplastique p21) semi-cristallin, plus préférentiellement prépolymère réactif polyamide semi-cristallin et un allongeur de chaîne p22) non polymérique, porteur de groupements réactifs avec ceux dudit prépolymère p21) et avec p21) et p22) étant réactifs par réaction de polyaddition.

4. Procédé selon l'une des revendications 1 à 3, **caractérisé en ce qu'**il s'agit d'un procédé de moulage RTM, transfert résine moulage, ou d'injection-compression ou S-RIM, réaction injection moulage structurel.

5. Procédé selon l'une des revendications 1 à 4, **caractérisé en ce que** ledit polymère thermoplastique de ladite matrice est semi-cristallin, de préférence un polyamide semi-cristallin, comme le sont lesdits prépolymères réactifs correspondants de la composition réactive p), avec ladite température d'injection T1 de l'étape a) étant supérieure à ladite Tf dudit polymère thermoplastique, de préférence polyamide semi-cristallin.

6. Procédé selon l'une des revendications 1 à 5, **caractérisé en ce que** ladite polymérisation dans le moule en étape b) n'est que partielle et qu'une étape de finition de la pièce moulée par recuit hors moule est mise en oeuvre séparément à une température Tr inférieure à la température de fusion Tf dudit polymère thermoplastique semi-cristallin, plus particulièrement, ladite température Tr étant entre Tf et Tf -30°C.

7. Procédé selon l'une des revendications 1 à 6, **caractérisé en ce que** le taux global de conversion des fonctions réactives desdits prépolymères dans ladite composition réactive p) au démoulage c) est d'au moins 50%, de préférence d'au moins 70%, avec ladite conversion n'étant que partielle, en particulier ne dépassant pas 90%.

8. Procédé selon l'une des revendications 1 à 7, **caractérisé en ce que** la masse moléculaire moyenne en nombre Mn, calculée à partir de dosage des fonctions, desdits prépolymères réactifs est dans la plage allant de 500 à 10000, de préférence de 1000 à 3000.

9. Procédé selon l'une des revendications 1 à 8, **caractérisé en ce que** la viscosité de ladite composition précurseur p) dans les conditions d'imprégnation ne dépasse pas 50 Pa.s, de préférence ne dépasse pas 10 Pa.s et plus préférentiellement ne dépasse pas 5 Pa.s, la viscosité étant mesurée suivant le manuel de référence du constructeur de l'appareil de mesure utilisé, qui est un rhéomètre Physica MCR301, sous balayage d'azote à la température donnée, en rhéologie plan-plan sous 1 Hz et 2% de déformation entre deux plans parallèles de diamètre de 50 mm.

10. Procédé selon l'une des revendications 1 à 9, **caractérisé en ce que** la température de transition vitreuse du polymère de ladite matrice thermoplastique est d'au moins 90°C, de préférence d'au moins 100°C et plus préférentiellement d'au moins 110°C et encore plus préférentiellement d'au moins 120°C et que la température de fusion Tf, dans le cas où ledit polymère est semi-cristallin, est inférieure à 300°C, de préférence inférieure à 280°C.

11. Procédé selon l'une des revendications 1 à 10, **caractérisé en ce que** ladite composition précurseur p) est telle que définie selon p1) en étant monocomposante à base d'un prépolymère polyamide p11) réactif bifonctionnel portant sur la même chaîne une fonction terminale amine et une fonction terminale acide, carboxy, ledit prépolymère polyamide p11) étant semi-cristallin.

12. Procédé selon l'une des revendications 1 à 10, **caractérisé en ce que** ladite composition précurseur est telle que définie selon p1) en étant bicomposante à base de deux prépolymères p12) polyamides : un premier prépolymère p121) polyamide réactif bifonctionnel portant 2 fonctions réactives X' identiques d'amine ou d'acide (carboxy) et un deuxième prépolymère p122) polyamide réactif bifonctionnel portant 2 fonctions Y' identiques d'amine ou d'acide, carboxy, avec les deux fonctions X' et Y' étant réactives entre elles, de préférence lesdits prépolymères polyamides p121) et p122) étant semi-cristallins.

13. Procédé selon l'une des revendications 1 à 10, **caractérisé en ce que** ladite composition précurseur est telle que définie selon p2) en étant bicomposante comprenant un prépolymère p21) polyamide réactif bifonctionnel portant 2 fonctions réactives X identiques d'amine ou d'acide, carboxy, et un allongeur de chaîne non polymérique p22), de préférence de masse moléculaire inférieure à 500 et en particulier inférieure à 400, ledit allongeur p22) portant 2 fonctions Y réactives identiques, avec lesdites fonctions X dudit prépolymère p21) étant réactives avec lesdites fonctions réactives Y dudit allongeur p22) et ledit prépolymère polyamide p21) étant semi-cristallin.

14. Procédé selon la revendication 13, **caractérisé en ce que** ladite fonction Y dudit allongeur p22) est sélectionnée comme suit en fonction de X :
- pour X étant carboxy, Y est choisi parmi : oxazoline, oxazine, imidazoline, aziridine ou époxy
- pour X étant amine, Y est choisi parmi : maléimide, époxy, isocyanate bloqué, oxazinone, oxazolinone, caprolactame ou anhydride carboxylique, ou carboxy.

15. Procédé selon l'une des revendications 1 à 14, **caractérisé en ce que** ledit renfort fibreux est à base de fibres de renfort longues, en particulier ayant un rapport ou facteur de forme L/D supérieur à 1000, de préférence supérieur à 2000.

16. Procédé selon l'une des revendications 1 à 15, **caractérisé en ce que** ladite pièce est une pièce mécanique ou de structure, y compris semi-structurale, en particulier en 3D.

17. Utilisation du procédé tel que défini selon l'une des revendications 1 à 12, dans la fabrication de pièces mécaniques et de structure, en particulier pour des applications dans le domaine de l'automobile, ferroviaire, marin, de l'éolien, du sport, aéronautique et spatial, photovoltaïque, solaire y compris pièces pour chauffage solaire thermique ou centrales solaires thermiques, transport routiers, pièces pour camions, du bâtiment, génie civil, équipements urbains et signalisation, des panneaux et loisirs.

## Patentansprüche

1. Verfahren zur Herstellung eines Teils aus einem thermoplastischen Verbundwerkstoff, der eine Faserverstärkung und eine thermoplastische Matrix umfasst, die aus einem halbkristallinen thermoplastischen Polymer, stärker bevorzugt auf der Basis eines halbkristallinen Polyamids, besteht, und das insbesondere eine Schmelztemperatur Tf von weniger als 320 °C, vorzugsweise eine Tf von weniger als 300 °C, stärker bevorzugt eine Tf von weniger als 290 °C, aufweist, wobei die Tf mittels dynamischer Differenz-Thermoanalyse, DSC, gemäß der Norm ISO 11357-3:2013 bestimmt wird und die Matrix die Faserverstärkung tränkt, wobei das Verfahren Folgendes umfasst:
a) einen Schritt des Tränkens der trockenen und in der geschlossenen Form angeordneten Faserverstärkung durch das Einspritzen einer flüssigen reaktiven Zusammensetzung p) im geschmolzenen Zustand in die Verstärkung bei einer Einspritztemperatur T1, wobei die reaktive Zusammensetzung p) eine Vorstufe des thermoplastischen Polymers ist und auf mindestens einem reaktiven Prepolymer des thermoplastischen Polymers basiert oder dieses umfasst, wobei die Temperatur T1 höher als die oder gleich der Temperatur T2 der Form ist, wobei die Temperatur T2 der geschlossenen Form während des gesamten Formens auf einem konstanten ,isothermen, Wert so gehalten wird, dass Tc < T2 ≤ Tc + X, wobei X zwischen 10 und 20 °C beträgt, X vorzugsweise gleich 15 °C ist, Tc die Kristallisationstemperatur des an der reaktiven Zusammensetzung beteiligten Prepolymers ist oder Tc die höchste der Kristallisationstemperaturen der an der reaktiven Zusammensetzung p) beteiligten Prepolymere ist, wobei Tc für das Prepolymer oder getrennt für jedes der Prepolymere mittels dynamischer Differenz-Thermoanalyse, DSC, gemäß der Norm ISO 11357-3:2013 bestimmt wird, oder das (die) Prepolymer(e) eine Viskosität bei der Temperatur T2 der Form von weniger als 50 Pa·s, vorzugsweise weniger als 10 Pa·s und stärker bevorzugt von weniger als 5 Pa·s aufweist (aufweisen),
wobei die Viskosität gemäß dem Referenzhandbuch des Herstellers der verwendeten Messvorrichtung, bei der es sich um ein Rheometer Physica MCR301 handelt, unter Spülen mit Stickstoff bei der gegebenen Temperatur als Ebene-Ebene-Rheologie bei 1 Hz und einer Verformung von 2 % zwischen zwei parallelen Ebenen mit einem Durchmesser von 50 mm gemessen wird,
b) einen Schritt einer zumindest teilweisen Polymerisation der reaktiven Zusammensetzung p) durch Polykondensation bzw. Polyaddition und eines Formens, wobei der Schritt der Polymerisation gleichzeitig mit Schritt a) des Tränkens und mit dem Formen erfolgt,
c) das Herausnehmen des Stücks aus der Form, sobald die Temperatur T3 des Stücks gleich der isothermen Regelungstemperatur T2 der Form ist, wobei die Polymerisation der Vorstufenzusammensetzung p) gegebenenfalls teilweise erfolgt,
d) gegebenenfalls und bei Bedarf die Fortführung der Polymerisation des Stücks in einem getrennten Schritt und außerhalb der Form durch Tempern in einem Ofen, vorzugsweise bei einer Tempertemperatur Tr, die niedriger als die Schmelztemperatur Tf ist, und wobei die Temperatur Tr insbesondere zwischen der Tf und Tf - 30 °C liegt.

2. Verfahren nach Anspruch 1, **dadurch gekennzeichnet, dass** T1 = T2.

3. Verfahren nach Anspruch 1 oder 2, **dadurch gekennzeichnet, dass** die Zusammensetzung p) gemäß den folgenden Optionen p1) und p2) definiert ist:
p1) eine Einkomponenten-Vorstufenzusammensetzung p11) oder eine Zweikomponenten-Vorstufenzusammensetzung p12), wobei die Einkomponenten-Vorstufenzusammensetzung p11) auf einem halbkristallinen thermoplastischen reaktiven Prepolymer p11) und stärker bevorzugt auf einem halbkristallinen reaktiven Polyamid-Prepolymer, das, vorzugsweise durch eine Polykondensation, gegenüber sich selbst reaktiv ist, basiert, und die Zweikomponenten-Vorstufenzusammensetzung p12) auf zwei thermoplastischen reaktiven Prepolymeren p121) und p122), stärker bevorzugt halbkristallinen reaktiven Polyamid-Prepolymeren, die, vorzugsweise durch eine Polykondensation oder Polyaddition, gegenüber sich selbst reaktiv sind, basiert
p2) eine Zweikomponenten-Zusammensetzung, die ein halbkristallines thermoplastisches reaktives Prepolymer p21), stärker bevorzugt ein halbkristallines reaktives Polyamid-Prepolymer, und ein nicht-polymeres Kettenverlängerungsmittel p22) umfasst, das Gruppen trägt, die gegenüber denjenigen des Prepolymers p21) reaktiv sind, und wobei p21) und p22) mittels einer Polyadditionsreaktion reaktiv sind.

4. Verfahren nach einem der Ansprüche 1 bis 3, **dadurch gekennzeichnet, dass** es sich um ein RTM-Form-, Harzspritzgieß-, oder ein Spritzpräge- oder S-RIM-, strukturelles Reaktionsspritzgieß-Verfahren, handelt.

5. Verfahren nach einem der Ansprüche 1 bis 4, **dadurch gekennzeichnet, dass** das thermoplastische Polymer der Matrix halbkristallin, vorzugsweise ein halbkristallines Polyamid, ist, wie die entsprechenden reaktiven Prepolymere der reaktiven Zusammensetzung p), wobei die Einspritztemperatur T1 von Schritt a) höher als die Tf des thermoplastischen Polymers, vorzugsweise des halbkristallinen Polyamids, ist.

6. Verfahren nach einem der Ansprüche 1 bis 5, **dadurch gekennzeichnet, dass** die Polymerisation in der Form in Schritt b) nur teilweise erfolgt und nur ein Endbearbeitungsschritt des Formteils durch Tempern außerhalb der Form getrennt bei einer Temperatur Tr erfolgt, die niedriger als die Schmelztemperatur Tf des halbkristallinen thermoplastischen Polymers ist, wobei die Temperatur Tr insbesondere zwischen Tf und Tf - 30 °C liegt.

7. Verfahren nach einem der Ansprüche 1 bis 6, **dadurch gekennzeichnet, dass** der gesamte Umsatz von reaktiven Funktionen der Prepolymere in der reaktiven Zusammensetzung p) beim Herausnehmen c) aus der Form mindestens 50 %, vorzugsweise mindestens 70 %, beträgt, wobei die Umwandlung nur teilweise erfolgt, insbesondere nicht 90 % übersteigt.

8. Verfahren nach einem der Ansprüche 1 bis 7, **dadurch gekennzeichnet, dass** das ausgehend von einer Bestimmung von Funktionen der reaktiven Prepolymere berechnete Zahlenmittel Mn der Molmasse im Bereich von 500 bis 10000, vorzugsweise von 1000 bis 3000, liegt.

9. Verfahren nach einem der Ansprüche 1 bis 8, **dadurch gekennzeichnet, dass** die Viskosität der Vorstufenzusammensetzung p) unter den Tränkungsbedingungen nicht 50 Pa·s übersteigt, vorzugsweise nicht 10 Pa·s übersteigt und stärker bevorzugt nicht 5 Pa·s übersteigt, wobei die Viskosität gemäß dem Referenzhandbuch des Herstellers der verwendeten Messvorrichtung, bei der es sich um ein Rheometer Physica MCR301 handelt, unter Spülen mit Stickstoff bei der gegebenen Temperatur als Ebene-Ebene-Rheologie bei 1 Hz und einer Verformung von 2 % zwischen zwei parallelen Ebenen mit einem Durchmesser von 50 mm gemessen wird.

10. Verfahren nach einem der Ansprüche 1 bis 9, **dadurch gekennzeichnet, dass** die Glasübergangstemperatur des Polymers der thermoplastischen Matrix mindestens 90 °C, vorzugsweise mindestens 100 °C und stärker bevorzugt mindestens 110 °C und noch bevorzugter mindestens 120 °C beträgt und dass die Schmelztemperatur Tf in demjenigen Fall, in dem das Polymer halbkristallin ist, niedriger als 300 °C, vorzugsweise niedriger als 280 °C, ist.

11. Verfahren nach einem der Ansprüche 1 bis 10, **dadurch gekennzeichnet, dass** die Vorstufenzusammensetzung p) wie in p1) definiert ist, indem sie basierend auf einem bifunktionellen reaktiven Polyamid-Prepolymer p11), das an derselben Kette eine terminale Aminfunktion und eine terminale Säurefunktion, Carboxy, trägt, einkomponentig ist, wobei das Polyamid-Prepolymer p11) halbkristallin ist.

12. Verfahren nach einem der Ansprüche 1 bis 10, **dadurch gekennzeichnet, dass** die Vorstufen-Zusammensetzung wie in p1) definiert ist, indem sie basierend auf zwei Polyamid-Prepolymeren p12): einem ersten bifunktionellen reaktiven Polyamid-Prepolymer p121), das 2 identische reaktive Amin- oder Säure- (Carboxy-)Funktionen X' trägt, und einem zweiten bifunktionellen reaktiven Polyamid-Prepolymer p122), das 2 identische Amin- oder Säure-, Carboxy-, Funktionen Y' trägt, zweikomponentig ist, wobei die beiden Funktionen X' und Y' miteinander reaktiv sind, wobei die Polyamid-Prepolymere p121) und p122) vorzugsweise halbkristallin sind.

13. Verfahren nach einem der Ansprüche 1 bis 10, **dadurch gekennzeichnet, dass** die Vorstufenzusammensetzung wie in p2) definiert ist, indem sie zweikomponentig ist, wobei sie ein bifunktionelles reaktives Polyamid-Prepolymer p21), das 2 identische reaktive Amin- oder Säure-, Carboxy-, Funktionen X trägt, und ein nicht-polymeres Kettenverlängerungsmittel p22) umfasst, wobei die Molmasse vorzugsweise kleiner als 500 und insbesondere kleiner als 400 ist, wobei das Verlängerungsmittel p22) 2 identische reaktive Funktionen Y trägt, wobei die Funktionen X des Prepolymers p21) gegenüber den reaktiven Funktionen Y des Verlängerungsmittels p22) reaktiv sind und das Polyamid-Prepolymer p21) halbkristallin ist.

14. Verfahren nach Anspruch 13, **dadurch gekennzeichnet, dass** die Funktion des Verlängerungsmittels p22) wie folgt in Abhängigkeit von X ausgewählt wird:
- wenn X Carboxy ist, wird Y ausgewählt aus: einem Oxazolin, Oxazin, Imidazolin, Aziridin oder Epoxy,
- wenn X Amin ist, wird Y ausgewählt aus: einem Maleimid, Epoxy, blockierten Isocyanat, Oxazinon, Oxazolinon, Caprolactam oder Carbonsäureanhydrid oder Carboxyanhydrid.

15. Verfahren nach einem der Ansprüche 1 bis 14, **dadurch gekennzeichnet, dass** die Faserverstärkung auf langen Verstärkungsfasern basiert, die insbesondere ein L/D-Verhältnis oder einen L/D-Formfaktor von mehr als 1000, vorzugsweise mehr als 2000, aufweisen.

16. Verfahren nach einem der Ansprüche 1 bis 15, **dadurch gekennzeichnet, dass** es sich bei dem Teil um ein mechanisches oder Konstruktionsteil einschließlich eines halbtragenden oder 3D-Teils handelt.

17. Verwendung des Verfahrens gemäß der Definition in einem der Ansprüche 1 bis 12 zur Herstellung von mechanischen und Konstruktionsteilen, insbesondere für Anwendungen im Kraftfahrzeug-, Eisenbahn-, Meeres-, Wind-, Sport-, Luft- und Raumfahrt-, Fotovoltaik-, Solarbereich, einschließlich Teilen zur Beheizung mit Sonnenenergie oder für Solarthermiekraftwerke, den Straßenverkehr, Teile für Lastkraftwagen, Gebäude, Hoch- und Tiefbau, städtische und Signalisierungseinrichtungen, Schilder und Freizeitaktivitäten.

## Claims

1. Process for manufacturing a part made of thermoplastic composite material comprising a fibrous reinforcement and a thermoplastic matrix consisting of a semicrystalline thermoplastic polymer, more preferably based on a semicrystalline polyamide, and more particularly having a melting temperature Tm of less than 320°C, preferably a Tm of less than 300°C, more preferably a Tm of less than 290°C, where Tm is determined by differential scanning calorimetry, DSC, according to standard ISO 11357-3:2013 and where said matrix impregnates said fibrous reinforcement, said process comprising:
a) a step of impregnating said fibrous reinforcement, dry and placed in said closed mould beforehand, by injection onto said reinforcement, at an injection temperature T1, of a liquid reactive composition p) in the melt state, said reactive composition p) being a precursor of said thermoplastic polymer and being based on or comprising at least one reactive prepolymer of said thermoplastic polymer, said temperature T1 being greater than or equal to the temperature T2 of the mould, the temperature T2 of said closed mould being maintained at a constant, isothermal, value throughout moulding, such that Tc <T2 ≤ Tc + X, X being from 10 to 20°C, preferably X being equal to 15°C, Tc being the crystallization temperature of said prepolymer forming part of the reactive composition or Tc being the highest of the crystallization temperatures of said prepolymers forming part of the reactive composition p),
Tc being determined on said prepolymer or separately on each of said prepolymers by differential scanning calorimetry, DSC, according to standard ISO 11357-3:2013, said one or more prepolymers having a viscosity at said temperature T2 of said mould of less than 50 Pa.s, preferably less than 10 Pa.s, and more preferably less than 5 Pa.s,
the viscosity being measured according to the reference manual of the constructor of the measuring instrument used, which is a Physica MCR301 rheometer, under nitrogen blanketing at the temperature given, in plate/plate rheology at 1 Hz and 2% deformation between two parallel plates with a diameter of 50 mm,
b) a step of at least partially polymerizing said reactive composition p) by polycondensation or by polyaddition as appropriate, and moulding, with the polymerization step being simultaneous with the impregnating step a) and with said moulding,
c) demoulding said part as soon as the temperature of said part T3 is equal to said isothermal regulation temperature T2 of said mould, with the polymerization of said precursor composition p) being optionally partial,
d) optionally and if necessary, continuing the polymerization of said part in a separate step outside the mould, by annealing in an oven, preferably at an annealing temperature Ta lower than the melting temperature Tm and with said temperature Ta being situated more particularly between Tm and Tm -30°C.

2. Process according to Claim 1, **characterized in that** T1 = T2.

3. Process according to Claim 1 or 2, **characterized in that** said composition p) is defined according to the following options p1) and p2):
p1) a single-component precursor composition p11) or two-component precursor composition p12), said single-component composition p11) being based on a semicrystalline thermoplastic reactive prepolymer p11) and more preferably a semicrystalline polyamide reactive prepolymer, which is reactive with itself, preferably by polycondensation, and said two-component composition p12) being based on two semicrystalline thermoplastic reactive prepolymers p121) and p122), more preferably semicrystalline polyamide reactive prepolymers, which are reactive with themselves, preferably by polycondensation or polyaddition,
p2) a two-component composition comprising a semicrystalline thermoplastic reactive prepolymer p21), more preferably a semicrystalline polyamide reactive prepolymer, and a nonpolymeric chain extender p22) bearing groups which are reactive with those of said prepolymer p21), and with p21) and p22) being reactive by polyaddition reaction.

4. Process according to one of Claims 1 to 3, **characterized in that** it is an RTM - resin transfer moulding - or injection/compression moulding or S-RIM - structural reaction injection moulding - process.

5. Process according to one of Claims 1 to 4, **characterized in that** said thermoplastic polymer of said matrix is semicrystalline, preferably a semicrystalline polyamide, as are said corresponding reactive prepolymers of the reactive composition p), with said injection temperature T1 of step a) being higher than said Tm of said thermoplastic polymer, preferably semicrystalline polyamide.

6. Process according to one of Claims 1 to 5, **characterized in that** said polymerization in the mould in step b) is only partial and that a step of finishing the moulded part by annealing outside the mould is carried out separately at a temperature Ta below the melting temperature Tm of said semicrystalline thermoplastic polymer, more particularly said temperature Ta being between Tm and Tm -30°C.

7. Process according to one of Claims 1 to 6, **characterized in that** the overall degree of conversion of the reactive functions of said prepolymers in said reactive composition p), at the demoulding c), is at least 50%, preferably at least 70%, with said conversion being only partial, in particular not exceeding 90%.

8. Process according to one of Claims 1 to 7, **characterized in that** the number-average molecular weight Mn, calculated from the quantitative determination of the functions, of said reactive prepolymers is in the range of from 500 to 10 000, preferably from 1000 to 3000.

9. Process according to one of Claims 1 to 8, **characterized in that** the viscosity of said precursor composition p) under the impregnation conditions does not exceed 50 Pa.s, preferably does not exceed 10 Pa.s and more preferably does not exceed 5 Pa.s, the viscosity being measured according to the reference manual of the constructor of the measuring instrument used, which is a Physica MCR301 rheometer, under nitrogen blanketing at the temperature given, in plate/plate rheology at 1 Hz and 2% deformation between two parallel plates with a diameter of 50 mm.

10. Process according to one of Claims 1 to 9, **characterized in that** the glass transition temperature of the polymer of said thermoplastic matrix is at least 90°C, preferably at least 100°C and more preferably at least 110°C and even more preferably at least 120°C, and that the melting temperature Tm, in the case where said polymer is semicrystalline, is below 300°C, preferably below 280°C.

11. Process according to one of Claims 1 to 10, **characterized in that** said precursor composition p) is as defined according to p1) while being a single-component composition based on a bifunctional reactive polyamide prepolymer p11) bearing on the same chain an amine end function and an acid, carboxy, end function, said polyamide prepolymer p11) being semicrystalline.

12. Process according to one of Claims 1 to 10, **characterized in that** said precursor composition is as defined according to p1) while being a two-component composition based on two polyamide prepolymers p12): a first bifunctional reactive polyamide prepolymer p121) bearing 2 identical amine or acid (carboxy) reactive functions X' , and a second bifunctional reactive polyamide prepolymer p122) bearing 2 identical amine or acid, carboxy, functions Y', with the two functions X' and Y' being reactive with one another, said polyamide prepolymers p121) and p122) preferably being semicrystalline.

13. Process according to one of Claims 1 to 10, **characterized in that** said precursor composition is as defined according to p2) while being a two-component composition comprising a bifunctional reactive polyamide prepolymer p21) bearing 2 identical amine or acid, carboxy, reactive functions X and a nonpolymeric chain extender p22), preferably having a molecular weight of less than 500 and in particular less than 400, said extender p22) bearing 2 identical reactive functions Y, with said functions X of said prepolymer p21) being reactive with said reactive functions Y of said extender p22) and said polyamide prepolymer p21) being semicrystalline.

14. Process according to Claim 13, **characterized in that** said function Y of said extender p22) is selected as follows according to X:
- when X is carboxy, Y is chosen from: oxazoline, oxazine, imidazoline, aziridine or epoxy;
- when X is amine, Y is chosen from: maleimide, epoxy, blocked isocyanate, oxazinone, oxazolinone, caprolactam or carboxylic, or carboxy, anhydride,.

15. Process according to one of Claims 1 to 14, **characterized in that** said fibrous reinforcement is based on long reinforcing fibres, in particular having an LID aspect ratio or factor of greater than 1000, preferably greater than 2000.

16. Process according to one of Claims 1 to 15, **characterized in that** said part is a mechanical or structural, including semi-structural, in particular 3D, part.

17. Use of the process as defined in one of Claims 1 to 12, in the manufacture of mechanical and structural parts, in particular for applications in the following fields: the motor vehicle industry, the railroad industry, the marine industry, wind power, sports, aeronautics and space, photovoltaics, the solar industry including parts for thermal solar heating or solar power stations, road transport, parts for trucks, the construction field, civil engineering, urban equipment and signage, panels, and leisure.
